# EUROPEAN PATENT APPLICATION

(11) **EP 4 575 632 A1**
(43) Date of publication of application: **25.06.2025**
(21) Application number: 23868334.6
(22) Date of filing: 05.07.2023
(51) Int. Cl.: G03B 13/36, G03B 3/10, G03B 5/04, G03B 5/06, G03B 17/12

(54) **CAMERA MODULE AND ELECTRONIC DEVICE COMPRISING THE CAMERA MODULE**

(30) Priority: 19.09.2022 KR 20220117633; 18.10.2022 KR 20220134222
(71) Applicant: Samsung Electronics Co., Ltd., Suwon-si, Gyeonggi-do 16677 (KR)
(72) Inventor: RHO, Hyungjin, Suwon-si Gyeonggi-do 16677 (KR); YU, Donghun, Suwon-si Gyeonggi-do 16677 (KR); HWANG, Youngjae, Suwon-si Gyeonggi-do 16677 (KR); LEE, Kihuk, Suwon-si Gyeonggi-do 16677 (KR)
(74) Representative: HGF
(86) International application number: PCT/KR2023/009463
(87) International publication number: WO 2024/063274

(57) **Abstract**

A camera module according to an embodiment may include a frame, a lens unit which is movably disposed with respect to the frame and includes at least one lens, a first carrier which includes an Auto Focus (AF) magnet disposed to face a first direction, and is coupled to the lens unit to move the lens unit in the first direction, and a second carrier which includes a first Optic Image Stabilization (OIS) magnet disposed to a first face and a second OIS magnet disposed to a second face and moves the lens unit in a second direction and/or a third direction different from the second direction. The frame may include a first AF coil disposed to the frame to face the AF magnet, a first OIS coil disposed to the frame to face the first OIS magnet, and a second OIS coil disposed to the frame to face the second OIS magnet. The first carrier may include a first yoke disposed to face the first OIS magnet, and a second yoke disposed to face the second OIS magnet.

Various other embodiments identified through the specification are possible.

## Description

### [Technical Field]

Various embodiments of the disclosure relate to a camera module and an electronic device including the camera module.

### [Background Art]

High-performance, ultra-small camera modules are adopted in various electronic devices, in particular, portable devices (e.g., smartphones) or mobile communication terminals (e.g., tablet Personal Computers (PCs), laptops). In order for the camera module to capture an image, it is necessary to adjust a focus of a lens so that the image is formed accurately on an image sensor included in the camera module. In addition, the smaller the size of the electronic device is, the poorer the image quality may be due to a movement of a user holding the electronic device when capturing the image.

An Auto Focus (AF) function is a function of an optical system which automatically adjusts a focus on a subject. The electronic device may move the lens or the image sensor so that the subject is in focus.

An Optic Image Stabilization (OIS) technique may be applied to improve image quality of the captured image. The electronic device may detect a movement of the electronic device by using a motion sensor included in the electronic device. The electronic device may acquire a stabilized image, by driving the lens or the image sensor to move in accordance with the movement of the electronic device.

The aforementioned information may be provided as the related art to aid understanding of the disclosure. No claim or determination is made as to whether any of the aforementioned content is applicable as the prior art related to the disclosure.

### [Disclosure of Invention]

### [Solution to Problem]

A camera module according to an embodiment of the disclosure may include a frame, a lens unit which is movably disposed with respect to the frame and includes at least one lens, a first carrier which includes an Auto Focus (AF) magnet disposed to face a first direction, and is coupled to the lens unit to move the lens unit in the first direction, and a second carrier which includes a first Optic Image Stabilization (OIS) magnet disposed to a first face and a second OIS magnet disposed to a second face and moves the lens unit in a second direction and/or a third direction different from the second direction. The frame may include a first AF coil disposed to the frame to face the AF magnet, a first OIS coil disposed to the frame to face the first OIS magnet, and a second OIS coil disposed to the frame to face the second OIS magnet. The first carrier may include a first yoke disposed to face the first OIS magnet, and a second yoke disposed to face the second OIS magnet.

An electronic device according to an embodiment of the disclosure may include a frame, a lens unit which is movably disposed with respect to the frame and includes at least one lens, a first carrier which includes an AF magnet disposed to face a first direction, and is coupled to the lens unit to move the lens unit in the first direction, and a second carrier which includes a first OIS magnet disposed to a first face and a second OIS magnet disposed to a second face and moves the lens unit in a second direction and/or a third direction different from the second direction. The frame may include a first AF coil disposed to the frame to face the AF magnet, a first OIS coil disposed to the frame to face the first OIS magnet, and a second OIS coil disposed to the frame to face the second OIS magnet. The first carrier may include a first yoke disposed to face the first OIS magnet, and a second yoke disposed to face the second OIS magnet.

### [Brief Description of Drawings]

FIG. 1 is an exploded view of a camera module according to an embodiment;
FIG. 2 illustrates a cross-sectional structure of a camera module, viewed in a direction of a lens, according to an embodiment;
FIG. 3 is a drawing for comparing a height of a camera module according to an embodiment;
FIG. 4 illustrates a cross-sectional structure of a camera module according to an embodiment;
FIG. 5 illustrates a cross-sectional structure of a camera module, viewed in a direction of a lens, according to an embodiment, and a cross-sectional structure of the camera module, viewed in another direction;
FIG. 6 illustrates another cross-sectional structure of a camera module, viewed in a direction of a lens, and a cross-sectional structure of the camera module, viewed in another direction;
FIG. 7 illustrates a cross-sectional structure of a camera module, viewed in a direction of a lens, according to an embodiment, and a cross-sectional structure of the camera module, viewed in another direction;
FIG. 8 is a block diagram of an electronic device in a network environment according to various embodiments; and
FIG. 9 is a block diagram illustrating a camera module according to an embodiment.

With regard to the description of the drawings, the same or similar reference numerals may be used to refer to the same or similar elements.

### [Mode for the Invention]

Hereinafter, various embodiments of the disclosure are described with reference to the accompanying drawings. However, it should be appreciated that this is not intended to limit the technological features set forth herein to particular embodiments and include various modifications, equivalents, and/or alternatives for an embodiment of the disclosure.

An electronic device according to various embodiments of the disclosure may include, for example, at least one of a smartphone, a tablet Personal Computer (PC), a mobile phone, a video phone, an e-book reader, a desktop PC, a laptop PC, a netbook computer, a workstation, a server, a Personal Digital Assistant (PDA), a Portable Multimedia Player (PMP), an MPEG-1 Audio Layer 3 (MP3) player, a mobile medical device, a camera, and a wearable device. According to various embodiments, the wearable device may include at least one of an accessory-type device (e.g., a watch, a ring, a bracelet, an anklet, a necklace, glasses, contact lenses, or a Head-Mounted Device (HMD)), a fabric- or clothes-integrated device (e.g., electronic clothes), a body attaching-type device (e.g., a skin pad or tattoo), and a body implantable device (e.g., an implantable circuit).

According to some embodiments, the electronic device may be a home appliance. The home appliance may include, for example, at least one of a TeleVision (TV), a Digital Video Disk (DVD) player, an audio player, a refrigerator, an air conditioner, a cleaner, an oven, a microwave oven, a washing machine, an air purifier, a set-top box, a home automation control panel, a security control panel, a TV box, a game console, an electronic dictionary, an electronic key, a camcorder, and an electronic picture frame.

According to another embodiment, the electronic device may include at least one of various medical devices (e.g., various portable medical measuring devices (e.g., a blood sugar measuring device, a heartrate measuring device, a blood pressure measuring device, a body temperature measuring device, etc.), Magnetic Resonance Angiography (MRA), Magnetic Resonance Imaging (MRI), Computed Tomography (CT), imaging equipment, ultrasonic instrument, etc.)), a navigation device, a Global Navigation Satellite System (GNSS), an Event Data Recorder (EDR), a Flight Data Recorder (FDR), a car infotainment device, an electronic equipment for ship (e.g., a vessel navigation device, a gyro compass, etc.), avionics, a security device, a car head unit, an industrial or domestic robot, an Automatic Teller's Machine (ATM) of financial institutions, Point Of Sales (POS) of shops, and Internet of things (e.g., a light bulb, various sensors, an electric or gas meter, a sprinkler device, a fire alarm, a thermostat, a streetlamp, a toaster, a fitness equipment, a hot water tank, a heater, a boiler, etc.).

According to some embodiments, the electronic device may include at least one of furniture or part of buildings/constructions, an electronic board, an electronic signature receiving device, a projector, and various measurement machines (e.g., water supply, electricity, gas, propagation measurement machine, etc.). In various embodiments, the electronic device may be one or more combinations of the aforementioned various devices. According to some embodiments, the electronic device may be a flexible electronic device. In addition, the electronic device according to an embodiment of the disclosure is not limited to the aforementioned devices, and may include a new electronic device depending on technical progress.

With the trend of a small-sized electronic device, a camera module included in the electronic device is also required to be small in size. In particular, when the camera module is disposed to a device having a thin thickness, a height of the camera module may significantly affect the thickness of the device. However, a driving unit for providing an Auto Focus (AF) function and/or an Optic Image Stabilization (OIS) function shall be included in the camera module. Therefore, there is a limitation in lowering the height of the camera module to place the driving unit.

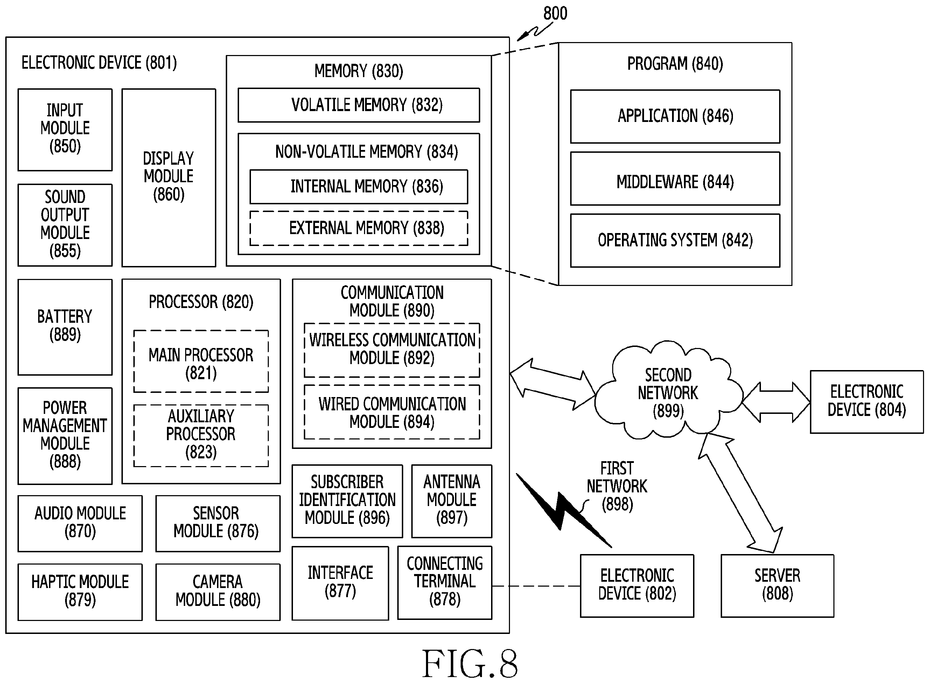

According to an embodiment, the aforementioned electronic device may be referred to by an electronic device 801 of FIG. 8.

Advantages acquired in the disclosure are not limited to the aforementioned advantages, and other advantages not mentioned herein may be clearly understood by those skilled in the art to which the disclosure pertains from the following descriptions.

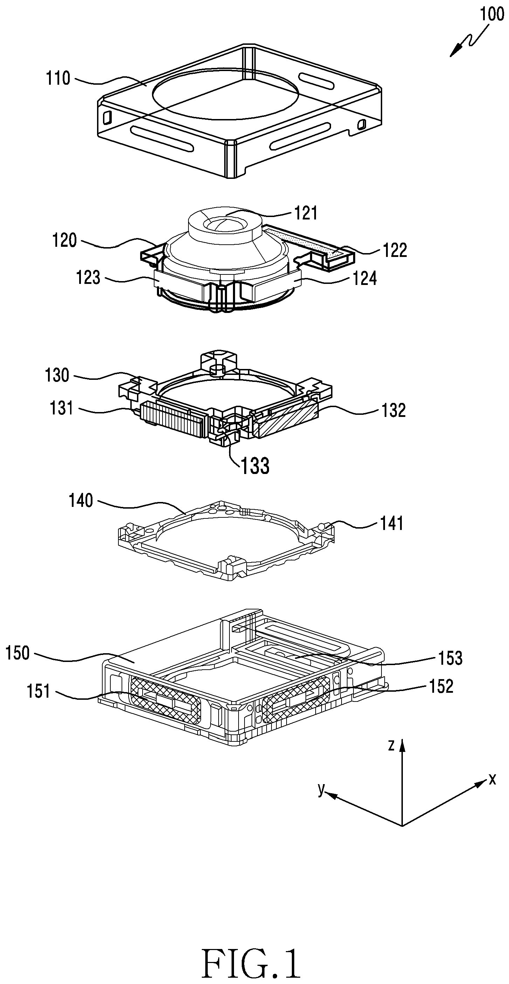

FIG. 1 is an exploded view of a camera module 100 according to an embodiment.

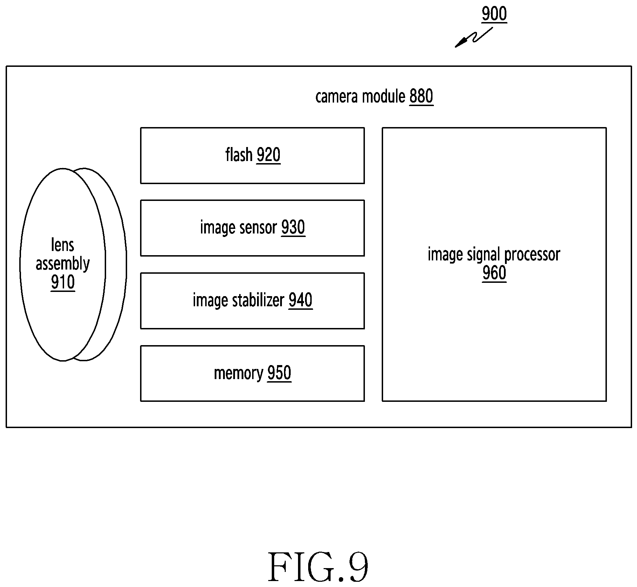

The camera module 100 of FIG. 1 may be referred to by a camera module 880 of FIG. 9. An electronic device (e.g., an electronic device 801 of FIG. 8) according to an embodiment may include the camera module 100.

The camera module 100 according to an embodiment may include a cover 110, a first carrier 120, a lens unit 121, a second carrier 130, and a frame 150. FIG. 1 is for explaining a structure of the camera module 100 according to an embodiment, and at least some of the components of FIG. 1 may be modified or omitted. Alternatively, the camera module 100 may further include another component. In an example, when an Optic Image Stabilization (OIS) function or an Auto Focus (AF) function is performed by moving an image sensor (not shown) included in the camera module 100, content for an operation of the lens unit 121 may be replaced with content for an operation of the image sensor (not shown). In an example, the camera module 100 may further include a third carrier 140 disposed between the second carrier 130 and the frame 150.

In the disclosure, a first direction may be a direction (e.g., a z-axis direction) substantially identical to an optical axis of a lens included in the lens unit 121 or parallel to the optical axis. A second direction may be a direction (e.g., an x-axis direction) substantially perpendicular to the optical axis. A third direction may be a direction (e.g., a y-axis direction) substantially perpendicular to the optical axis and the second direction.

According to an embodiment, the cover 110 may provide a framework for covering another component. A shape of the cover 110 may change depending on a shape of the camera module 100 or a component included in the camera module 110. For example, the cover 110 may be a housing having a box shape. The cover 110 may protect a different component by covering the different component.

According to an embodiment, the lens unit 121 may include at least one lens so that an image for a subject is formed on the image sensor. A position of the lens unit 121 may move with respect to the frame 150 by means of the first carrier 120 and/or the second carrier 130. In an example, when the camera module 100 includes the third carrier 140, the position of the lens unit 121 may move with respect to the frame 150 by means of the first carrier 120, the second carrier 130, and/or the third carrier 140. The lens unit 121 according to an embodiment may be disposed to the first carrier 120. For example, the lens unit 121 may be coupled to the first carrier 120, or may be fixed to the first carrier 120.

According to an embodiment, the first carrier 120 may move the lens unit 121 in the first direction (e.g., the z-axis direction). The first carrier 120 according to an embodiment may include an AF actuator configured to move the lens unit 121 for auto-focus adjustment. For example, the first carrier 120 may include an AF magnet 122 disposed to face the first direction. In an embodiment, the first carrier 120 may move the lens unit 121 in a direction of an optical axis of the lens included in the lens unit 121 or a direction parallel to the optical axis. According to an embodiment, the lens unit 121 may move in a state of being coupled (or fixed) to the first carrier 120.

According to an embodiment, the second carrier 130 may move the lens unit 121 in the second direction (e.g., the x-axis direction) and/or the third direction (e.g., the y-axis direction). The second direction and the third direction may be directions different from each other. The second carrier 130 according to an embodiment may include an OIS actuator configured to move the lens unit 121 for optic image stabilization. For example, the second carrier 130 may include a first OIS magnet 131 disposed to a first face and a second OIS magnet 132 disposed to a second face. In an embodiment, the second carrier 130 may move the lens unit 121 for optic image stabilization in a direction substantially perpendicular to the optical axis of the lens included in the lens unit 121.

According to an embodiment, the frame 150 may provide a framework for supporting another component. A shape of the frame 150 may change depending on a shape of the camera module 100 or a component included in the camera module 100. For example, the frame 150 may be a housing having a box shape.

According to an embodiment, the frame 150 may include at least one coil disposed to face at least one magnet disposed to the first carrier 120 and/or the second carrier 130. For example, the frame 150 may include at least one OIS coil (e.g., a first OIS coil 151) disposed to face the first OIS magnet 131, at least one OIS coil (e.g., a second OIS coil 152) disposed to face the second OIS magnet 132, and at least one AF coil (e.g., a first AF coil 153) disposed to face the AF magnet 122.

According to an embodiment, the first OIS coil 151, the second OIS coil 152, and/or at least one AF coil may be electrically or operatively coupled by means of a flexible printed circuit board. However, the disclosure is not limited thereto.

According to an embodiment, the first carrier 120 may be disposed on the second carrier 130. The first carrier 120 may be disposed to be movable in the first direction with respect to the second carrier 130. For example, referring to FIG. 1, the camera module 100 may include at least one first sphere 133 disposed between the first carrier 120 and the second carrier 130. In an embodiment, the at least one sphere 133 may move the first carrier 120 in the first direction with respect to the frame 150.

According to an embodiment, when the first carrier 120 moves in the first direction by an operation of the AF magnet 122 and at least one AF coil (e.g., the first AF coil 153), the lens unit 121 disposed to the first carrier 120 may move in the first direction.

According to an embodiment, the second carrier 130 may be disposed on the frame 150. The second carrier 130 may be disposed to be movable in the second direction and/or the third direction with respect to the frame 150. For example, the camera module 100 may include at least one sphere (e.g., a second sphere 141) disposed between the second carrier 130 and the frame 150. The second carrier 130 may move on the frame 150 with respect to the frame 150 by means of the at least one sphere.

According to an embodiment, when the first carrier 130 moves in the second direction and/or the third direction by an operation of at least one OIS magnet (e.g., the first OIS magnet 131 or the second OIS magnet 132) and at least one OIS coil (e.g., the first OIS coil 151 or the second OIS coil 152), the lens unit 121 included in the first carrier 120 may move in the second direction and/or the third direction.

In an embodiment, when the camera module 100 includes the third carrier 140, the second carrier 130 may be disposed on the third carrier 140. The third carrier 140 may be disposed to be movable in the second direction and/or the third direction with respect to the frame 150. For example, referring to FIG. 1, the camera module 100 may include the at least one second sphere 141 disposed between the second carrier 130 and the third carrier 140 and at least one third sphere (not shown) disposed between the third carrier 140 and the frame 150. In an embodiment, the at least one second sphere 141 may move the second carrier 130 in the second direction with respect to the frame 150. The at least one third sphere (not shown) may move the third carrier 140 in the third direction with respect to the frame 150.

According to an embodiment, when the third carrier 140 moves in the second direction and/or the third direction, the second carrier 130 disposed to the third carrier 140 may move in the second direction and/or the third direction. When the second carrier 130 moves in the second direction and/or the third direction, the lens unit 121 disposed to the first carrier 120 may move in the second direction and/or the third direction.

According to an embodiment, the first carrier 120 may include at least one yoke disposed to face at least one OIS magnet (e.g., the first OIS magnet 131) disposed to the second carrier 130. For example, referring to FIG. 1, the first carrier 120 may include a first yoke 123 disposed to face the first OIS magnet 131 and a second yoke 124 disposed to face the second OIS magnet 132.

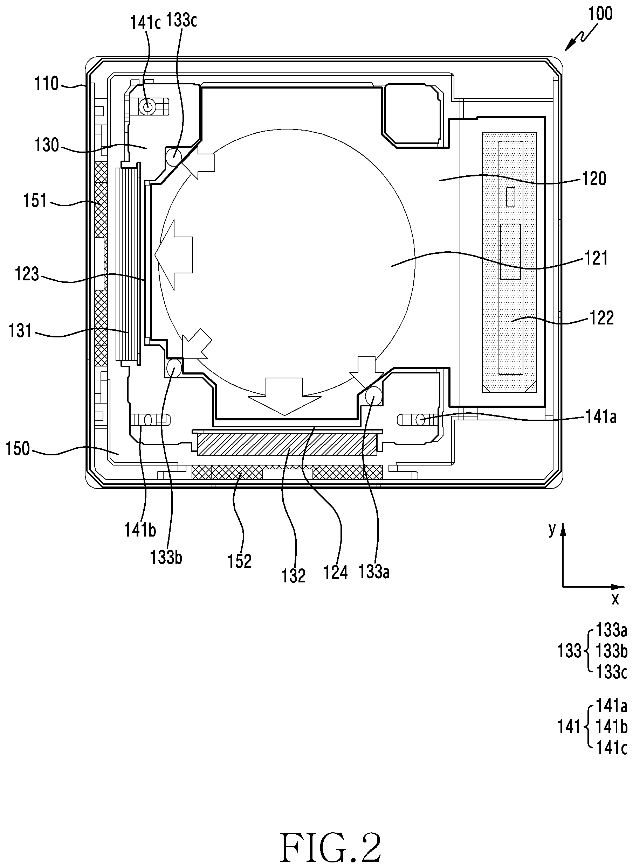

FIG. 2 illustrates a cross-sectional structure of a camera module 100, viewed in a direction of a lens, according to an embodiment.

The camera module 100 of FIG. 2 and components thereof may be referred to by the camera module 100 of FIG. 1 and components thereof. The same terms and/or the same reference numerals have been used for the same or substantially the same components as those described above, and redundant descriptions will be omitted.

According to an embodiment, a first OIS magnet 131 may be disposed to a first face facing a second direction (e.g., an x-axis direction or a -x-axis direction). The first OIS magnet 131 may be disposed to face the second direction (e.g., the x-axis direction or the -x-axis direction). The first OIS magnet 131 may be disposed to face a first OIS coil 151 disposed to one side face of a frame 150. A first carrier 120 and a second carrier 130 may move by a second-direction force acting on the first OIS magnet 131 due to a magnetic field generated by a current flowing in the first OIS foil 151.

According to an embodiment, a second OIS magnet 132 may be disposed to a second face facing a third direction (e.g., a y-axis direction or a -y-axis direction). In an embodiment, the second face may be substantially perpendicular to the first face. The second OIS magnet 132 may be disposed to face the third direction (e.g., the y-axis direction or the -y-axis direction). The second OIS magnet 132 may be disposed to face a second OIS coil 152 disposed to one side face of the frame 150. The first carrier 120 and the second carrier 130 (or a third carrier (e.g., the third carrier 140 of FIG. 1)) may move by a third-direction force acting on the second OIS magnet 132 due to a magnetic force generated by a current flowing in the second OIS coil 152.

According to an embodiment, a first yoke 123 may face substantially the same direction as the first OIS coil 151. For example, the first yoke 123 may be disposed to face the second direction (e.g., the x-axis direction) with respect to the first OIS coil 151, with the first OIS magnet 131 therebetween. A second yoke 124 may face substantially the same direction as the second OIS coil 152. For example, the second yoke 124 may be disposed to face the third direction (e.g., the y-axis direction) with respect to the second OIS coil 152, with the second OIS magnet 132 therebetween. However, the disclosure is not limited thereto.

According to an embodiment, at least one AF magnet (e.g., a first AF magnet 122) may be disposed to a face opposite to the first yoke 123 with respect to a lens unit 121. For example, the at least one AF magnet (e.g., the first AF magnet 122) may be disposed to a portion extended from a face opposite to one face of the first carrier 120 to which the first yoke 123 is disposed.

According to an embodiment, the first carrier 120 may move on the second carrier 130 by means of at least one first sphere 133. For example, the first carrier 120 may move in the first direction (e.g., the z-axis direction of FIG. 1) on the second carrier 130 by means of the at least one first sphere 133.

According to an embodiment, the second carrier 130 may include a first ball guide groove formed in the first direction to allow the first carrier 120 to move in the first direction. The at least one first sphere 133 may be disposed on the first ball guide groove. The at least one first sphere 133 disposed between the first carrier 120 and the second carrier 130 may roll along the first ball guide groove, thereby moving the first carrier 120 in the first direction. When the first carrier 120 moves in the first direction, the lens unit 121 accommodated in the first carrier 120 may move together in the first direction. In an embodiment, the first carrier 120 may include at least one ball guide groove formed at a position corresponding to the first ball guide groove of the second carrier 130.

According to an embodiment, the at least one first sphere 133 may be disposed with a yoke therebetween. For example, the first sphere 133 may include a first group 133a disposed to a portion adjacent to one end of the second yoke 124 (or between the second yoke 124 and the AF magnet 122), a second group 133b disposed between the first yoke 123 and the second yoke 124 (or a portion adjacent to one end of the first yoke 123), and a third group 133c disposed to a portion adjacent to the other end of the first yoke 123.

According to an embodiment, the first yoke 123 may be disposed between the second group 133b and the third group 133c, and the second yoke 124 may be disposed between the second group 133b and the first group 133a. However, the disclosure is not limited thereto. Although it is illustrated in FIG. 2 that the at least one first sphere 133 includes the first to third groups, a count and/or position of the first sphere 133 are not limited to FIG. 2. For example, the camera module 100 may include only the second group 133b, or may further include a group of the at least one first sphere 133.

According to an embodiment, the first carrier 120 may be tightly attached to the second carrier 130 due to an attraction force between at least one OIS magnet (e.g., the first OIS magnet 131) and at least one yoke (e.g., the first yoke 123). For example, the first carrier 120 may be tightly attached to the second carrier 130 in the second direction (e.g., the -x-axis direction) due to an attraction force between the first OIS magnet 131 and the first yoke 123. The first carrier 120 may be tightly attached to the second carrier 130 in the third direction (e.g., the -y-axis direction) due to an attraction force between the second OIS magnet 132 and the second yoke 124. Therefore, the at least one first sphere 133 may smoothly move forward and backward in the first direction (e.g., the z-axis direction of FIG. 1), without being detached between the first carrier 120 and the second carrier 130.

According to an embodiment, an electromagnetic force between an OIS magnet and an OIS coil may be concentrated by disposing at least one yoke (e.g., the first yoke 123 or the second yoke 124), thereby improving efficiency of an image stabilization function.

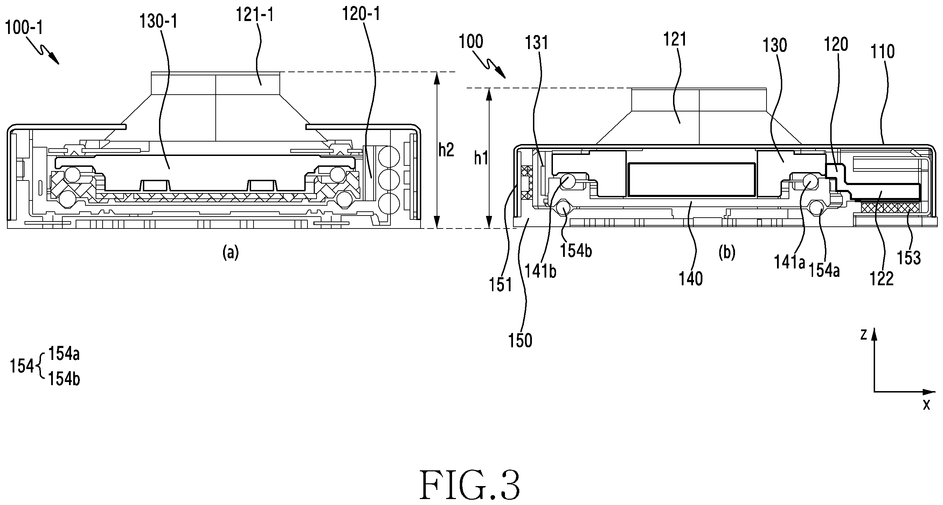

FIG. 3 is a drawing for comparing a height of a camera module according to an embodiment.

A sub-figure (a) of FIG. 3 may be a cross-sectional view for a camera module 100-1. For example, the camera module 100-1 may be a camera module in which an OIS carrier for OIS driving is disposed to an upper end (or inside) of an AF carrier for AF driving and an AF magnet for AF driving is disposed to face a second direction (e.g., an x-axis direction) or a third direction (e.g., a y-axis direction). A sub-figure (b) of FIG. 3 may be a cross-sectional view for a camera module 100 according to an embodiment of the disclosure.

The camera module 100 of FIG. 3 and components thereof may be referred to by the camera module 100 of FIG. 1 and FIG. 2 and components thereof. The same terms and/or the same reference numerals have been used for the same or substantially the same components as those described above, and redundant descriptions will be omitted.

A first carrier 120 and second carrier 130 included in the camera module 100 according to an embodiment may be disposed on a frame 150, and the second carrier 130 (e.g., an OIS carrier) may be disposed to a lower end (or outside) of the first carrier 120 instead of being disposed to the upper end (or inside) of the first carrier 120 (e.g., an AF carrier). In addition, at least one AF magnet (e.g., an AF magnet 122) may be disposed to a side face of the first carrier 120. For example, the first AF magnet 122 may be disposed to face a first direction (e.g., a z-axis direction) in a region protruding in one direction (e.g., the x-axis direction) from the first carrier 120. The at least one AF coil (e.g., a first AF coil 153) may be disposed to face the first direction in the frame 150 to face the at least one AF magnet 122. The first carrier 120 for AF driving is located at an upper end (or inside) of the second carrier 130, and an AF magnet (e.g., the first AF magnet 122) is disposed to face the first direction (or the first carrier 120 for AF driving is located at the upper end (or inside) of the second carrier 130 for OIS driving, and the OIS driving is driven in a solenoid driving manner), which may result in a decrease in a height of the camera module 100.

Specifically, as shown in the sub-figure (a) of FIG. 3, when a second carrier 130-1 (e.g., an OIS carrier for OIS driving) is disposed to an upper end (or inside) of a first carrier 120-1 (e.g., an AF carrier for AF driving) and an AF magnet for AF driving is disposed to face the second direction (e.g., the x-axis direction) or the third direction (e.g., the y-axis direction), the camera module 100-1 may have a second height h2 (e.g., a distance in the z-axis direction from a bottom face of the camera module 100-1 to one end of a lens unit 121-1). In this case, a first height h1 of the camera module 100 according to an embodiment (e.g., the distance in the z-axis from the bottom face of the camera module 100 to the one end of the lens unit 121) may be less than the second height h2.

According to an embodiment, since the first carrier 120 for AF driving is located at an upper end (or inside) of the second carrier 130 for OIS driving, the first carrier 120 may move only a lens unit 121 by using the AF magnet 122 for AF driving. Therefore, a burden on an AF driver (e.g., the AF magnet 122) may be reduced, and a volume of the AF magnet 122 may be reduced. Accordingly, a height or thickness of the camera module 100 may be reduced.

According to an embodiment, the first carrier 120 may move by a first-direction (a z-axis direction or a -z-axis direction) force acting on the AF magnet 122 due to a magnetic field generated by a current flowing in at least one AF coil (e.g., the first AF coil 153). Since the first carrier 120 moves in the first direction, the lens unit 121 may move in the first direction. Since the lens unit 121 moves in the first direction, a distance from an image sensor (not shown) included in the camera module 100 to at least one lens of the lens unit 121 may change.

According to an embodiment, the second carrier 130 may move on a third carrier 140 by means of at least one second sphere 141. For example, the second carrier 130 may move in the second direction (e.g., the x-axis direction) on the third carrier 140 by means of the at least one second sphere 141.

According to an embodiment, the third carrier 140 may include a second ball guide groove formed in the second direction to allow the second carrier 130 to move in the second direction. The at least one second sphere 141 may be disposed on the second ball guide groove. The at least one second sphere 141 disposed between the second carrier 130 and the third carrier 140 may roll along the second ball guide groove, thereby moving the second carrier 130 in the second direction. When the second carrier 130 moves in the second direction, the first carrier 120 may move in the second direction. When the first carrier 120 moves in the second direction, the lens unit 121 accommodated in the first carrier 120 may move together in the second direction. In an embodiment, the second carrier 130 may include at least one ball guide groove formed at a position corresponding to the second ball guide groove of the third carrier 140.

Referring to FIG. 2 and FIG. 3, the at least one second sphere 141 according to an embodiment may be disposed with an OIS magnet therebetween. For example, the second sphere 141 may include a first group 141a disposed to a portion adjacent to one end of a second OIS magnet 132 (or between the second OIS magnet 132 and the AF magnet 122), a second group 141b disposed between a first OIS magnet 131 and the second OIS magnet 132 (or a portion adjacent to one end of the first OIS magnet 131), and a third group 141c disposed to a portion adjacent to the other end of the first OIS magnet 131.

According to an embodiment, the first OIS magnet 131 may be disposed between the second group 141b and the third group 141c, and the second OIS magnet 132 may be disposed between the second group 141b and the first group 141a. However, the disclosure is not limited thereto. Although it is illustrated in FIG. 2 that the at least one second sphere 141 includes the first to third groups, a count and/or position of the second sphere 141 are not limited to FIG. 2. For example, the camera module 100 may include only the second group 141b, or may further include a group of the at least one second sphere 141.

According to an embodiment, the third carrier 140 may move on the frame 150 by means of the at least one third sphere 154. For example, the third carrier 140 may move in the third direction (e.g., the y-axis direction) on the frame 150 by means of the at least one third sphere 154.

According to an embodiment, the third carrier 140 may include a third ball guide groove formed in the third direction to allow the third carrier 140 to move in the third direction. The at least one third sphere 154 may be disposed on the third ball guide groove. The at least one third sphere 154 disposed between the third carrier 140 and the frame 150 may roll along the third ball guide groove, thereby moving the third carrier 140 in the third direction. When the third carrier 140 moves in the third direction, the second carrier 130 operatively coupled with the third carrier 140 may move in the third direction. When the third carrier 140 moves in the third direction, the lens unit 121 accommodated in the first carrier 120 may move together in the third direction. In an embodiment, the third carrier 140 may include at least one ball guide groove formed at a position corresponding to the third ball guide groove of the frame 150.

Referring to FIG. 2 and FIG. 3, the at least one third sphere 154 according to an embodiment may be disposed with an OIS magnet therebetween. For example, the third sphere 154 may include a first group 154a disposed to a portion adjacent to one end of the second OIS magnet 132 (or between the second OIS magnet 132 and the AF magnet 122), a second group 154b disposed between the first OIS magnet 131 and the second OIS magnet 132 (or a portion adjacent to one end of the first OIS magnet 131), and a third group (not shown) disposed to a portion adjacent to the other end of the first OIS magnet 131.

According to an embodiment, although not shown in FIG. 3, the first OIS magnet 131 may be disposed between the second group 154b and the third group (not shown), and the second OIS magnet 132 may be disposed between the second group 154b and the first group 154a. However, the disclosure is not limited thereto. Although it is illustrated in FIG. 3 that the at least one third sphere 154 includes the first and second groups, a count and/or position of the third sphere 154 are not limited to FIG. 3. For example, the camera module 100 may include only the second group 154b, or may further include a group of the at least one third sphere 154.

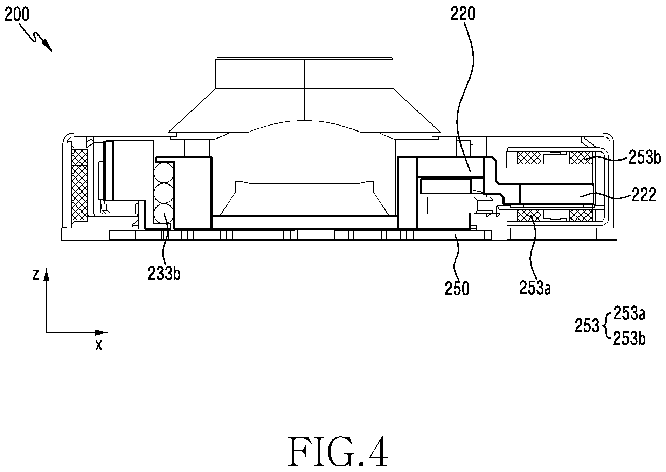

FIG. 4 illustrates a cross-sectional structure of a camera module 200 according to an embodiment.

The camera module 200 of FIG. 4 and components thereof may be referred to by the camera module 100 of FIG. 1 to FIG. 3 and components thereof. The same terms and/or the same reference numerals have been used for the same or substantially the same components as those described above, and redundant descriptions will be omitted.

According to an embodiment, the camera module 200 may include at least one AF coil 253 disposed to a frame 250. According to an embodiment, when an AF stroke increases, the camera module 200 may further include at least one coil facing a first AF coil 253a. For example, the at least one AF coil 253 may include the first AF coil 253a and a second AF coil 253b disposed to the frame 250 to face the first AF coil 253a.

Referring to FIG. 4, the first AF coil 253a may be disposed to face a +z-axis direction, and the second AF coil 253b may be disposed to face a -z-axis direction. In an embodiment, an AF magnet 222 may be disposed between the first AF coil 253a and the second AF coil 253b. In the camera module 200, for example, since the frame 250 further includes the second AF coil 253b, a strength of a magnetic field generated due to a current flowing in the AF coil may increase. A first carrier 220 may move by a first-direction force acting on the AF magnet 222 due to the magnetic field generated by the current flowing in the second AF coil 253b.

According to an embodiment, at least one sphere 233b may be referred to by the first sphere 133 of FIG. 1 or FIG. 2. Content overlapping with the aforementioned content will be omitted. Referring to FIG. 4, although it is illustrated that the first sphere 233b includes three spheres, the number of the first spheres 233b is not limited thereto. For example, the first sphere 233b may omit at least one sphere, or may additionally include at least one sphere.

According to an embodiment, the plurality of first spheres 233b may be disposed in a first direction as a lengthwise direction. The plurality of first spheres 233b may be disposed to face the first carrier 220.

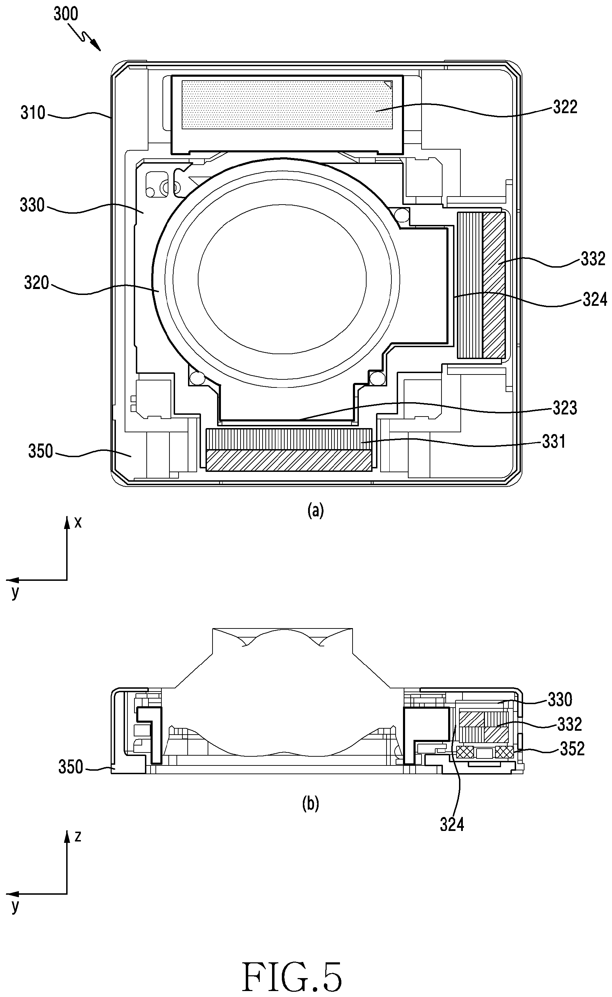

FIG. 5 illustrates a cross-sectional structure of a camera module 300, viewed in a direction of a lens (e.g. a -z-axis direction), according to an embodiment (a sub-figure (a) of FIG. 5), and a cross-sectional structure of a side face of the camera module 300, viewed in another direction (e.g., a +x-axis direction) (a sub-figure (b) of FIG. 5).

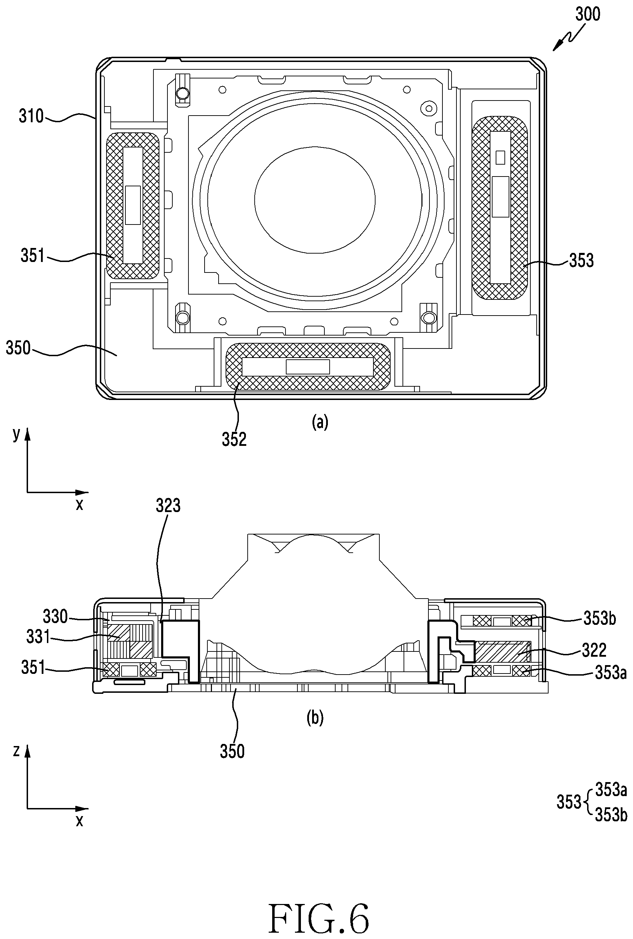

FIG. 6 illustrates another cross-sectional structure of a camera module 300, viewed in a direction of a lens (e.g., a -z-axis direction) (a sub-figure (a) of FIG. 6), and a cross-sectional structure of a side face of the camera module 300, viewed in another direction (e.g., a +y-axis direction) (a sub-figure (b) of FIG. 6).

The camera module 300 of FIG. 5 and FIG. 6 and components thereof may be referred to by the camera module 100 of FIG. 1 to FIG. 3 and components thereof, and/or the camera module 200 of FIG. 4 and components thereof.

The camera module 300 according to an embodiment may include a cover 310, a first carrier 320 coupled to a lens unit, a second carrier 330, and a frame 350. An image sensor unit may convert light received through at least one lens included in the lens unit into an electrical signal. The image sensor unit may be movable with respect to the frame 350. The first carrier 320 may move the image sensor unit in a first direction with respect to the frame 350. The second carrier 330 may move the image sensor unit in a second direction and/or a third direction with respect to the frame 350. Referring to FIG. 5, the first direction may be a z-axis direction or a -z-axis direction. The second direction may be an x-axis direction or a -x-axis direction. The third direction may be a y-axis direction or a -y-axis direction.

According to an embodiment, for OIS driving, a Lorenz driving scheme may be applied to the camera module 300. For example, referring to FIG. 5, the second carrier 330 according to an embodiment may include a first OIS magnet 331 and a second OIS magnet 332. The first OIS magnet 331 may be disposed to face a first yoke 323 disposed to a first face facing the second direction (e.g., the +x/-x-axis direction). The second OIS magnet 332 may be disposed to face a second yoke 324 disposed to a second face facing the third direction (e.g., the +y/-y-axis direction).

Referring to FIG. 6, a frame 350 may include a first OIS coil 351 disposed to face a first OIS magnet 331, and a second OIS coil 352 disposed to face a second OIS magnet 332. The first OIS coil 351 and/or the second OIS coil 352 may be disposed to face a first direction (e.g., a +z-axis direction). The first OIS magnet 331 and/or the second OIS magnet 332 may be disposed to face the first direction (e.g., a -z-axis direction).

According to an embodiment, a first yoke 323 may be disposed substantially perpendicular to the first OIS coil 351, and a second yoke 324 may be disposed substantially perpendicular to the second OIS coil 352.

According to an embodiment, since the camera module 300 incorporates a Lorentz driving scheme for OIS driving, a height (e.g., a height in the first direction) of the camera module 300 may be reduced.

According to an embodiment, the camera module 300 may include at least one AF coil 353 disposed to the frame 350. According to an embodiment, when an AF stroke increases, the camera module 300 may further include at least one coil facing a first AF coil 353a. For example, the at least one AF coil 353 may include the first AF coil 353a and a second AF coil 353b disposed to the frame 350 to face the first AF coil 353a.

Referring to FIG. 6, the first AF coil 353a may be disposed to face a +z-axis direction, and the second AF coil 353b may be disposed to face a -z-axis direction. In an embodiment, an AF magnet 322 may be disposed between the first AF coil 353a and the second AF coil 353b. In the camera module 300, for example, since the frame 350 further includes the second AF coil 353b, a strength of a magnetic field generated due to a current flowing in the AF coil may increase. The first carrier 320 may move by a first-direction (e.g., a z-axis direction) force acting on the AF magnet 322 due to the magnetic field generated by the current flowing in the second AF coil 353b.

According to an embodiment, the OIS driving of the camera module 300 is driven in a Lorenz driving manner, and the AF driving is driven in a solenoid driving manner, which may result in a decrease in the height of the camera module 300.

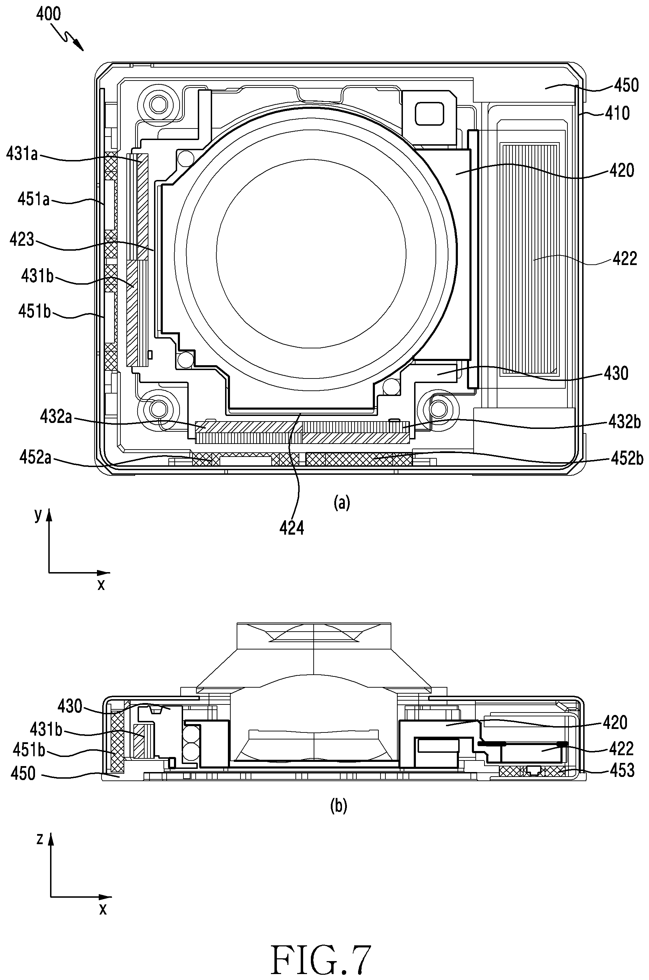

FIG. 7 illustrates a cross-sectional structure of a camera module 400, viewed in a direction of a lens (e.g., a -z-axis direction), according to an embodiment (a sub-figure (a) of FIG. 7), and a cross-sectional structure of the camera module 400, viewed in another direction (e.g., a +y-axis direction) (a sub-figure (b) of FIG. 7).

The camera module 400 of FIG. 7 and components thereof may be referred to by the camera module 100 of FIG. 1 to FIG. 3 and components thereof, the camera module 200 of FIG. 4, and/or the camera module 300 of FIG. 6, and components thereof. The same terms and/or the same reference numerals have been used for the same or substantially the same components as those described above, and redundant descriptions will be omitted.

According to an embodiment, the camera module 400 may include a cover 410, a first carrier 420, a second carrier 430, and a frame 450. The cover 410 may provide a framework for covering another component. The first carrier 420 may move a lens unit in a first direction (e.g., a z-axis direction). The first carrier 420 according to an embodiment may include an AF actuator configured to move the lens unit for auto-focus adjustment. The second carrier 430 may move the lens unit in a second direction (e.g., an x-axis direction) and/or a third direction (e.g., a y-axis direction) different from the second direction. The second carrier 430 according to an embodiment may include an OIS actuator configured to move the lens unit for optic image stabilization. The frame 450 may provide a framework for supporting another component. However, the structure of the camera module 400 is not limited thereto.

According to an embodiment, the camera module 400 may omit a third carrier (e.g., the third carrier 140 of FIG. 1). When the camera module 400 does not include the third carrier, a height of the camera module 400 may be reduced.

Referring to FIG. 7, the second carrier 430 according to an embodiment may include at least two OIS magnets on a first face in the second direction (e.g., the x-axis direction). For example, the second carrier 430 may include a first OIS magnet 431a on the first face, and a third OIS magnet 431b disposed parallel to the first OIS magnet 431a on the first face. The second carrier 430 may include at least two OIS magnets on a second face facing the third direction (e.g., the y-axis direction). For example, the second carrier 430 may include a second OIS magnet 432a on the second face, and a fourth OIS magnet 432b disposed parallel to the second OIS magnet 432a on the second face.

According to an embodiment, the first OIS magnet 431a and the third OIS magnet 431b may be disposed to face the second direction. The second OIS magnet 432a and the fourth OIS magnet 432b may be disposed to face the third direction.

According to an embodiment, the frame 450 may include at least two OIS coils disposed to the frame 450 to face at least two OIS magnets. For example, the frame 450 may include a first OIS coil 451a disposed to face the first OIS magnet 431a on one face in the second direction, and a third OIS coil 451b disposed to face the third magnet 431b. The frame 450 may include a second OIS coil 452a disposed to face a second OIS magnet 432a on one face in the third direction, and a fourth OIS coil 452a disposed to face the fourth OIS magnet 432b.

According to an embodiment, the first carrier 420 may include at least one yoke disposed to face at least one OIS magnet (e.g., the first OIS magnet 431a) disposed to the second carrier 430. For example, the first carrier 420 may include a first yoke 423 disposed to face the first OIS magnet 431a and the third OIS magnet 431b, and a second yoke 424 disposed to face the second OIS magnet 432a and the fourth OIS magnet 432b.

The first carrier 420 and second carrier 430 included in the camera module 400 according to an embodiment may be disposed on the frame 450, and the second carrier 430 (e.g., an OIS carrier) may be disposed to a lower end (or outside) of the first carrier 420 instead of being disposed to the upper end (or inside) of the first carrier 420 (e.g., an AF carrier). In addition, at least one AF magnet (e.g., a first AF magnet 422) may be disposed to a side face of the first carrier 420. For example, the first AF magnet 422 may be disposed to face the first direction (e.g., the z-axis direction) in a region protruding in one direction (e.g., the x-axis direction) from the first carrier 420. At least one AF coil (e.g., the first AF coil 453) may be disposed to face the first direction in the frame 450 to face the at least one first AF magnet 422. The first carrier 420 for AF driving may be located at an upper end (or inside) of the second carrier 430, and an AF magnet (e.g., the first AF magnet 422) may be disposed to face the first direction (or the first carrier 420 for AF driving may be located at the upper end (or inside) of the second carrier 430 for OIS driving, and the OIS driving may be driven in a solenoid driving manner), which may result in a decrease in a height of the camera module 400. However, the disclosure is not limited thereto. For example, the OIS driving of the camera module 400 may be driven in a Lorenz driving manner, and the AF driving may be driven in a solenoid driving manner. Therefore, the height of the camera module 400 may be further reduced.

FIG. 8 is a block diagram of an electronic device 801 in a network environment 800 according to various embodiments. Referring to FIG. 8, the electronic device 801 in the network environment 800 may communicate with an electronic device 802 via a first network 898 (e.g., a short-range wireless communication network), or an electronic device 804 or a server 808 via a second network 899 (e.g., a long-range wireless communication network). According to an embodiment, the electronic device 801 may communicate with the electronic device 804 via the server 808. According to an embodiment, the electronic device 801 may include a processor 820, a memory 830, an input module 850, a sound output module 855, a display module 860, an audio module 870, a sensor module 876, an interface 877, a connecting terminal 878, a haptic module 879, a camera module 880, a power management module 888, a battery 889, a communication module 890, a subscriber identification module 896, or an antenna module 897. In some embodiments, at least one (e.g., the connecting terminal 878) of the components may be omitted from the electronic device 801, or one or more other components may be added. According to some embodiments, some (e.g., the sensor module 876, the camera module 880, or the antenna module 897) of the components may be integrated as a single component (e.g., the display module 860).

The processor 820 may execute, for example, software (e.g., a program 840) to control at least one different component (e.g., a hardware or software component) of the electronic device 801 coupled with the processor 820, and may perform various data processing or computation. According to an embodiment, as at least part of the data processing or computation, the processor 820 may store a command or data received from another component (e.g., the sensor module 876 or the communication module 890) in a volatile memory 832, process the command or the data stored in the volatile memory 832, and store resulting data in a non-volatile memory 834. According to an embodiment, the processor 820 may include a main processor 821 (e.g., a central processing unit or an application processor), or an auxiliary processor 823 (e.g., a graphics processing unit, a neural processing unit (NPU), an image signal processor, a sensor hub processor, or a communication processor) that is operable independently from, or in conjunction with, the main processor 821. For example, when the electronic device 801 includes the main processor 821 and the auxiliary processor 823, the auxiliary processor 823 may be configured to use lower power than the main processor 821 or to be specified for a designated function. The auxiliary processor 823 may be implemented as separate from or as part of the main processor 821.

The auxiliary processor 823 may control at least some of functions or states related to at least one component (e.g., the display module 860, the sensor module 876, or the communication module 890) among the components of the electronic device 801, instead of the main processor 821 while the main processor 821 is in an inactive (e.g., sleep) state, or together with the main processor 821 while the main processor 821 is in an active state (e.g., executing an application). According to an embodiment, the auxiliary processor 823 (e.g., an image signal processor or a communication processor) may be implemented as part of another component (e.g., the camera module 880 or the communication module 890) functionally related to the auxiliary processor 123. According to an embodiment, the auxiliary processor 823 (e.g., the neural processing unit) may include a hardware structure specified for artificial intelligence model processing. The artificial intelligence model may be generated via machine learning. Such learning may be performed, e.g., by the electronic device 801 in which the artificial intelligence is performed or via a separate server (e.g., the server 808). Learning algorithms may include, but are not limited to, e.g., supervised learning, unsupervised learning, semi-supervised learning, or reinforcement learning. The artificial intelligence model may include a plurality of artificial neural network layers. The artificial neural network may be a Deep Neural Network (DNN), a Convolutional Neural Network (CNN), a Recurrent Neural Network (RNN), a Restricted Boltzmann Machine (RBM), a Deep Belief Network (DBN), a Bidirectional Recurrent Deep Neural Network (BRDNN), deep Q-networks or a combination of two or more thereof, but is not limited thereto. The artificial intelligence model may, additionally or alternatively, include a software structure other than the hardware structure.

The memory 830 may store various data used by at least one component (e.g., the processor 820 or the sensor module 876) of the electronic device 801. The data may include, for example, software (e.g., the program 840) and input data or output data for a command related thereto. The memory 830 may include the volatile memory 832 or the non-volatile memory 834.

The program 840 may be stored in the memory 830 as software, and may include, for example, an operating system 842, middleware 844, or an application 846.

The input module 850 may receive a command or data to be used by components (e.g., the processor 820) of the electronic device 801, from the outside (e.g., a user) of the electronic device 801. The input module 850 may include, for example, a microphone, a mouse, a keyboard, keys (e.g., buttons), or a digital pen (e.g., a stylus pen).

The sound output module 855 may output sound signals to the outside of the electronic device 801. The sound output module 855 may include, for example, a speaker or a receiver. The speaker may be used for general purposes, such as multimedia playback or recording playback. The receiver may be used for receiving incoming calls. According to an embodiment, the receiver may be implemented as separate from or as part of the speaker.

The display module 860 may visually provide information to the outside (e.g., a user) of the electronic device 801. The display 860 may include, for example, a display, a hologram device, or a projector and control circuitry to control a corresponding one of the display, hologram device, and projector. According to an embodiment, the display 860 may include a touch sensor configured to detect a touch, or a pressure sensor configured to measure the intensity of a force generated by the touch.

The audio module 870 may convert a sound into an electrical signal and vice versa. According to an embodiment, the audio module 870 may obtain the sound via the input module 850, or output the sound via the sound output module 855 or an external electronic device (e.g., the electronic device 802) (e.g., a speaker or a headphone) directly or wirelessly coupled with the electronic device 801.

The sensor module 876 may detect an operational state (e.g., power or temperature) of the electronic device 801 or an external environmental state (e.g., a state of a user), and generate an electrical signal or data value corresponding to the detected state. According to an embodiment, the sensor module 876 may include, for example, a gesture sensor, a gyro sensor, an atmospheric pressure sensor, a magnetic sensor, an accelerometer, a grip sensor, a proximity sensor, a color sensor, an InfraRed (IR) sensor, a biometric sensor, a temperature sensor, a humidity sensor, or an illuminance sensor.

The interface 877 may support one or more specified protocols to be used for the electronic device 801 to be coupled with the external electronic device (e.g., the electronic device 802) directly or wirelessly. According to an embodiment, the interface 877 may include, for example, a High Definition Multimedia Interface (HDMI), a Universal Serial Bus (USB) interface, a Secure Digital (SD) card interface, or an audio interface.

The connecting terminal 878 may include a connector via which the electronic device 801 may be physically connected with the external electronic device (e.g., the electronic device 802). According to an embodiment, the connecting terminal 878 may include, for example, a HDMI connector, a USB connector, a SD card connector, or an audio connector (e.g., a headphone connector).

The haptic module 879 may convert an electrical signal into a mechanical stimulus (e.g., a vibration or motion) or electrical stimulus which may be recognized by a user via human tactile sensation or kinesthetic sensation. According to an embodiment, the haptic module 879 may include, for example, a motor, a piezoelectric element, or an electric stimulator.

The camera module 880 may capture still images and moving images. According to an embodiment, the camera module 880 may include one or more lenses, image sensors, image signal processors, or flashes.

The power management module 888 may manage power supplied to the electronic device 801. According to an embodiment, the power management module 888 may be implemented as at least part of, for example, a Power Management Integrated Circuit (PMIC).

The battery 889 may supply power to at least one component of the electronic device 801. According to an embodiment, the battery 889 may include, for example, a primary cell which is not rechargeable, a secondary cell which is rechargeable, or a fuel cell.

The communication module 890 may support establishing a direct (e.g., wired) communication channel or a wireless communication channel between the electronic device 801 and the external electronic device (e.g., the electronic device 802, the electronic device 804, or the server 808) and performing communication via the established communication channel. The communication module 890 may include one or more communication processors that are operable independently from the processor 820 (e.g., the application processor) and supports a direct (e.g., wired) communication or a wireless communication. According to an embodiment, the communication module 890 may include a wireless communication module 892 (e.g., a cellular communication module, a short-range wireless communication module, or a Global Navigation Satellite System (GNSS) communication module) or a wired communication module 894 (e.g., a Local Area Network (LAN) communication module or a power line communication module). A corresponding one of these communication modules may communicate with the external electronic device 804 via a first network 898 (e.g., a short-range communication network, such as Bluetooth, Wireless-Fidelity (Wi-Fi) direct, or Infrared Data Association (IrDA)) or a second network 899 (e.g., a long-range communication network, such as a legacy cellular network, a 5G network, a next-generation communication network, the Internet, or a computer network (e.g., LAN or Wide Area Network (WAN)). These various types of communication modules may be implemented as a single component (e.g., a single chip), or may be implemented as multi components (e.g., multi chips) separate from each other. The wireless communication module 892 may identify or authenticate the electronic device 801 in a communication network, such as the first network 898 or the second network 899, using subscriber information (e.g., International Mobile Subscriber Identity (IMSI)) stored in the subscriber identification module 896.

The wireless communication module 892 may support a 5G network after a 4G network, and next-generation communication technology, e.g., New Radio (NR) access technology. The NR access technology may support enhanced Mobile Broadband (eMBB), Massive Machine Type Communications (mMTC), or Ultra-Reliable and Low-Latency Communications (URLLC). The wireless communication module 892 may support a high-frequency band (e.g., the mmWave band) to achieve, e.g., a high data transmission rate. The wireless communication module 892 may support various technologies for securing performance on a high-frequency band, such as, e.g., beamforming, massive Multiple-Input and Multiple-Output (massive MIMO), Full Dimensional MIMO (FD-MIMO), array antenna, analog beam-forming, or large scale antenna. The wireless communication module 892 may support various requirements specified in the electronic device 801, an external electronic device (e.g., the electronic device 804), or a network system (e.g., the second network 899). According to an embodiment, the wireless communication module 892 may support a peak data rate (e.g., 20Gbps or more) for implementing eMBB, loss coverage (e.g., 164dB or less) for implementing mMTC, or U-plane latency (e.g., 0.5ms or less for each of Downlink (DL) and Uplink (UL), or a round trip of 1ms or less) for implementing URLLC.

The antenna module 897 may transmit or receive a signal or power to or from the outside (e.g., the external electronic device). According to an embodiment, the antenna module 897 may include one antenna including a radiator formed of a conductive body or conductive pattern formed on a substrate (e.g., a Printed Circuit Board (PCB)). According to an embodiment, the antenna module 897 may include a plurality of antennas (e.g., an antenna array). In this case, at least one antenna appropriate for a communication scheme used in a communication network, such as the first network 898 or the second network 899, may be selected from the plurality of antennas by, e.g., the communication module 890. The signal or the power may then be transmitted or received between the communication module 890 and the external electronic device via the selected at least one antenna. According to some embodiments, other parts (e.g., Radio Frequency Integrated Circuit (RFIC)) than the radiator may be further formed as part of the antenna module 897.

According to various embodiments, the antenna module 897 may form a mmWave antenna module. According to an embodiment, the mmWave antenna module may include a printed circuit board, a RFIC disposed on a first face (e.g., the bottom face) of the printed circuit board, or adjacent to the first face and capable of supporting a designated high-frequency band (e.g., the mmWave band), and a plurality of antennas (e.g., array antennas) disposed on a second face (e.g., the top or side face) of the printed circuit board, or adjacent to the second face and capable of transmitting or receiving signals of the designated high-frequency band.

At least some of the above-described components may be coupled to each other via an inter-peripheral communication scheme (e.g., a bus, General Purpose Input and Output (GPIO), Serial Peripheral Interface (SPI), or Mobile Industry Processor Interface (MIPI)), and may mutually exchange signals (e.g., commands or data).

According to an embodiment, commands or data may be transmitted or received between the electronic device 801 and the external electronic device 804 via the server 808 coupled with the second network 899. Each of the external electronic devices 802 and 804 may be a device of the same or a different type from the electronic device 801. According to an embodiment, all or some of operations to be executed at the electronic device 801 may be executed at one or more of the external electronic devices 802, 804, and 808. For example, if the electronic device 801 has to perform a function or a service automatically, or in response to a request from a user or another device, the electronic device 801, instead of, or in addition to, executing the function or the service, may request the one or more external electronic devices to perform at least part of the function or the service. The one or more external electronic devices receiving the request may execute the at least part of the function or the service requested, or an additional function or an additional service related to the request, and transfer an outcome of the execution to the electronic device 801. The electronic device 801 may provide the outcome, with or without further processing of the outcome, as at least part of a reply to the request. To this end, for example, a cloud computing, distributed computing, Mobile Edge Computing (MEC), or client-server computing technology may be used. The electronic device 801 may provide ultra-low-latency services using, e.g., distributed computing or mobile edge computing. In another embodiment, the external electronic device 804 may include an Internet-of-Things (IoT) device. The server 808 may be an intelligent server using machine learning and/or a neural network. According to an embodiment, the external electronic device 804 or the server 808 may be included in the second network 899. The electronic device 801 may be applied to intelligent services (e.g., smart home, smart city, smart car, or healthcare) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an Application-Specific Integrated Circuit (ASIC).

Various embodiments as set forth herein may be implemented as software (e.g., the program 840) including one or more instructions that are stored in a storage medium (e.g., an internal memory 836 or an external memory 838) that is readable by a machine (e.g., the electronic device 801). For example, a processor (e.g., the processor 820) of the machine (e.g., the electronic device 801) may invoke at least one of the one or more instructions stored in the storage medium, and execute it. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., Compact Disc Read Only Memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated as a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

FIG. 9 is a block diagram 900 illustrating the camera module 880 according to various embodiments. Referring to FIG. 9, the camera module 880 may include a lens assembly 910, a flash 920, an image sensor 930, an image stabilizer 940, a memory 950 (e.g., a buffer memory), or an image signal processor 960. The lens assembly 910 may collect light emitted or reflected from an object whose image is to be taken. The lens assembly 910 may include one or more lenses. According to an embodiment, the camera module 880 may include a plurality of lens assemblies 910. In such a case, the camera module 880 may form, for example, a dual camera, a 360-degree camera, or a spherical camera. Some of the plurality of lens assemblies 910 may have the same lens attribute (e.g., an angle of view, a focal length, auto-focusing, f number, or optical zoom), or at least one lens assembly may have one or more lens attributes different from those of another lens assembly. The lens assembly 910 may include, for example, a wide-angle lens or a telephoto lens.

The flash 920 may emit light that is used to reinforce light reflected from an object. According to an embodiment, the flash 920 may include one or more Light Emitting Diodes (LEDs) (e.g., a Red-Green-Blue (RGB) LED, a white LED, an InfraRed (IR) LED, or an UltraViolet (UV) LED) or a xenon lamp. The image sensor 930 may obtain an image corresponding to an object by converting light emitted or reflected from the object and transmitted via the lens assembly 910 into an electrical signal. According to an embodiment, the image sensor 930 may include one selected from image sensors having different attributes, such as an RGB sensor, a Black-and-White (BW) sensor, an IR sensor, or a UV sensor, a plurality of image sensors having the same attribute, or a plurality of image sensors having different attributes. Each image sensor included in the image sensor 930 may be implemented using, for example, a Charged Coupled Device (CCD) sensor or a Complementary Metal Oxide Semiconductor (CMOS) sensor.

The image stabilizer 940 may move the image sensor 930 or at least one lens included in the lens assembly 910 in a particular direction, or control an operational attribute (e.g., adjust the read-out timing) of the image sensor 930 in response to the movement of the camera module 880 or the electronic device 801 including the camera module 880. This allows compensating for at least part of a negative effect (e.g., image blurring) by the movement on an image being captured. According to an embodiment, the image stabilizer 940 may sense such a movement by the camera module 880 or the electronic device 801 using a gyro sensor (not shown) or an acceleration sensor (not shown) disposed inside or outside the camera module 880. According to an embodiment, the image stabilizer 940 may be implemented, for example, as an optic image stabilizer. The memory 950 may store, at least temporarily, at least part of an image obtained via the image sensor 930 for a subsequent image processing task. For example, if image capturing is delayed due to shutter lag or multiple images are quickly captured, an obtained raw image (e.g., a Bayer-patterned image, a high-resolution image) may be stored in the memory 950, and its corresponding copy image (e.g., a low-resolution image) may be previewed via the display device 860. Thereafter, if a specified condition is met (e.g., by a user's input or system command), at least part of the raw image stored in the memory 950 may be obtained and processed, for example, by the image signal processor 960. According to an embodiment, the memory 950 may be configured as at least part of the memory 830 or as a separate memory that is operated independently from the memory 830.

The image signal processor 960 may perform at least one image processing with respect to an image obtained via the image sensor 930 or an image stored in the memory 950. The at least one image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 960 may perform control (e.g., exposure time control or read-out timing control) with respect to at least one (e.g., the image sensor 930) of the components included in the camera module 880. An image processed by the image signal processor 960 may be stored again in the memory 950 for further processing, or may be provided to an external component (e.g., the memory 830, the display device 860, the electronic device 802, the electronic device 804, or the server 808) outside the camera module 880. According to an embodiment, the image signal processor 960 may be configured as at least part of the processor 820, or as a separate processor that is operated independently from the processor 820. If the image signal processor 960 is configured as a separate processor from the processor 820, at least one image processed by the image signal processor 960 may be displayed, by the processor 820, via the display device 860 as it is or after being further processed.

According to an embodiment, the electronic device 801 may include a plurality of camera modules 880 having different attributes or functions. In such a case, at least one of the plurality of camera modules 880 may form, for example, a wide-angle camera and at least another of the plurality of camera modules 880 may form a telephoto camera. Similarly, at least one of the plurality of camera modules 880 may form, for example, a front camera and at least another of the plurality of camera modules 880 may form a rear camera.

As described above, a camera module (e.g., the camera module 100 of FIG. 1) according to an embodiment of the disclosure may include a frame (e.g., the frame 150 of FIG. 1), a lens unit (e.g., the lens unit 121) which is movably disposed with respect to the frame and includes at least one lens, a first carrier (e.g., the first carrier 120 of FIG. 1) which includes an Auto Focus (AF) magnet disposed to face a first direction, and is coupled to the lens unit to move the lens unit in the first direction, and a second carrier (e.g., the second carrier 130 of FIG. 1) which includes a first Optic Image Stabilization (OIS) magnet disposed to a first face and a second OIS magnet disposed to a second face and moves the lens unit in a second direction and/or a third direction different from the second direction. The frame may include a first AF coil disposed to the frame to face the AF magnet, a first OIS coil disposed to the frame to face the first OIS magnet, and a second OIS coil disposed to the frame to face the second OIS magnet. The first carrier may include a first yoke disposed to face the first OIS magnet, and a second yoke disposed to face the second OIS magnet.

According to an embodiment, the camera module may include at least one sphere disposed between the first carrier and the second carrier so that the first carrier is movable on the second carrier.

According to an embodiment, the second carrier may include a first ball guide groove disposed so that the at least one first sphere is movable in the first direction on a face facing the first carrier.

According to an embodiment, the camera module may include a third carrier disposed between the second carrier and the frame.

According to an embodiment, the camera module may include at least one second sphere disposed between the second carrier and the third carrier so that the second carrier is movable on the third carrier.

According to an embodiment, the third carrier may include a second ball guide groove disposed so that the at least one second sphere is movable in the second direction on a face facing the second carrier.

According to an embodiment, the camera module may include at least one third sphere disposed between the third carrier and the frame so that the third carrier is movable on the frame.

According to an embodiment, the frame may include a third ball guide groove disposed so that the at least one third sphere is movable in the third direction on a face facing the third carrier.

According to an embodiment, the frame may further include a second AF coil facing the first AF coil. The AF magnet may be disposed between the first AF coil and the second AF coil.

According to an embodiment, the first direction may be a direction identical to an optical axis of the lens or parallel to the optical axis. The second direction may be a direction perpendicular to the optical axis. The third direction may be a direction perpendicular to the optical axis and the second direction.

According to an embodiment, the first face of the second carrier may be substantially perpendicular to the second face.

According to an embodiment, the AF magnet may be disposed to a portion extended from a face facing one face of the first carrier to which the first yoke is disposed.

According to an embodiment, the first OIS magnet and/or the second OIS magnet may be disposed to face the first direction. The first OIS coil may be disposed to the frame to face the first OIS magnet. The second OIS coil may be disposed to the frame to face the second OIS magnet.

According to an embodiment, the first OIS magnet may be disposed to face a second direction, and the second OIS magnet may be disposed to face a third direction. The first OIS coil may be disposed to the frame to face the first OIS magnet, and the second OIS coil may be disposed to the frame to face the second OIS magnet.

According to an embodiment, the second carrier may further include a third OIS magnet disposed parallel to the first OIS magnet on the first face, and a fourth OIS magnet disposed parallel to the second OIS magnet on the second face. The frame may further include a third OIS coil disposed to the frame to face the third OIS magnet, and a fourth OIS coil disposed to the frame to face the fourth OIS magnet.

As described above, an electronic device according to an embodiment of the disclosure may include a frame, a lens unit which is movably disposed with respect to the frame and includes at least one lens, a first carrier which includes an AF magnet disposed to face a first direction, and is coupled to the lens unit to move the lens unit in the first direction, and a second carrier which includes a first OIS magnet disposed to a first face and a second OIS magnet disposed to a second face and moves the lens unit in a second direction and/or a third direction different from the second direction. The frame may include a first AF coil disposed to the frame to face the AF magnet, a first OIS coil disposed to the frame to face the first OIS magnet, and a second OIS coil disposed to the frame to face the second OIS magnet. The first carrier may include a first yoke disposed to face the first OIS magnet, and a second yoke disposed to face the second OIS magnet.

According to an embodiment, the electronic device may include at least one sphere disposed between the first carrier and the second carrier so that the first carrier is movable on the second carrier. The second carrier may include a first ball guide groove disposed so that the at least one first sphere is movable in the first direction on a face facing the first carrier.

According to an embodiment, the electronic device may include a third carrier disposed between the second carrier and the frame.

According to an embodiment, the electronic device may include at least one second sphere disposed between the second carrier and the third carrier so that the second carrier is movable on the third carrier. The third carrier may include a second ball guide groove disposed so that the at least one second sphere is movable in the second direction on a face facing the second carrier.

According to an embodiment, the electronic device may include at least one third sphere disposed between the third carrier and the frame so that the third carrier is movable on the frame. The frame may include a third ball guide groove disposed so that the at least one third sphere is movable in the third direction on a face facing the third carrier.

## Claims

1. A camera module comprising:
a frame;
a lens unit which is movably disposed with respect to the frame and includes at least one lens;
a first carrier which includes an Auto Focus (AF) magnet disposed to face a first direction, and is coupled to the lens unit to move the lens unit in the first direction; and
a second carrier which includes a first Optic Image Stabilization (OIS) magnet disposed to a first face and a second OIS magnet disposed to a second face and moves the lens unit in a second direction and/or a third direction different from the second direction,
wherein the frame includes a first AF coil disposed to the frame to face the AF magnet, a first OIS coil disposed to the frame to face the first OIS magnet, and a second OIS coil disposed to the frame to face the second OIS magnet, and
wherein the first carrier includes a first yoke disposed to face the first OIS magnet, and a second yoke disposed to face the second OIS magnet.

2. The camera module of claim 1, further comprising at least one sphere disposed between the first carrier and the second carrier so that the first carrier is movable on the second carrier.

3. The camera module of claim 2, wherein the second carrier includes a first ball guide groove disposed so that the at least one first sphere is movable in the first direction on a face facing the first carrier.

4. The camera module of claim 1, further comprising a third carrier disposed between the second carrier and the frame.

5. The camera module of claim 4, further comprising at least one second sphere disposed between the second carrier and the third carrier so that the second carrier is movable on the third carrier.

6. The camera module of claim 5, wherein the third carrier includes a second ball guide groove disposed so that the at least one second sphere is movable in the second direction on a face facing the second carrier.

7. The camera module of claim 4, further comprising at least one third sphere disposed between the third carrier and the frame so that the third carrier is movable on the frame.

8. The camera module of claim 7, wherein the frame includes a third ball guide groove disposed so that the at least one third sphere is movable in the third direction on a face facing the third carrier.

9. The camera module of claim 1,
wherein the frame further includes a second AF coil facing the first AF coil, and
wherein the AF magnet is disposed between the first AF coil and the second AF coil.

10. The camera module of claim 1,
wherein the first direction is a direction identical to an optical axis of the lens or parallel to the optical axis,
wherein the second direction is a direction perpendicular to the optical axis, and
wherein the third direction is a direction perpendicular to the optical axis and the second direction.

11. The camera module of claim 1, wherein the first face of the second carrier is substantially perpendicular to the second face.

12. The camera module of claim 1, wherein the AF magnet is disposed to a portion extended from a face facing one face of the first carrier to which the first yoke is disposed.

13. The camera module of claim 1,
wherein the first OIS magnet and/or the second OIS magnet are disposed to face the first direction, and
wherein the first OIS coil is disposed to the frame to face the first OIS magnet, and the second OIS coil is disposed to the frame to face the second OIS magnet.

14. The camera module of claim 1,
wherein the first OIS magnet is disposed to face a second direction, and the second OIS magnet is disposed to face a third direction, and
wherein the first OIS coil is disposed to the frame to face the first OIS magnet, and the second OIS coil is disposed to the frame to face the second OIS magnet.

15. The camera module of claim 1,
wherein the second carrier further includes a third OIS magnet disposed parallel to the first OIS magnet on the first face, and a fourth OIS magnet disposed parallel to the second OIS magnet on the second face, and
wherein the frame further includes a third OIS coil disposed to the frame to face the third OIS magnet, and a fourth OIS coil disposed to the frame to face the fourth OIS magnet.
